# EUROPÄISCHE PATENTSCHRIFT

(11) **EP 4 042 906 B1**
(45) Veröffentlichungstag und Bekanntmachung des Hinweises auf die Patenterteilung: **03.07.2024**
(21) Anmeldenummer: 22154425.7
(22) Anmeldetag: 01.02.2022
(51) Int. Cl.: A47F 3/04, A23L 3/28, F25D 23/00

(54) **VERBESSERTE VORRICHTUNG ZUR KÜHLUNG UND VERARBEITUNG VON LEBENSMITTEL**
IMPROVED APPARATUS FOR COOLING AND PROCESSING FOOD PRODUCTS
DISPOSITIF AMÉLIORÉ DESTINÉ À LA RÉFRIGÉRATION ET AU TRAITEMENT DES DENRÉES ALIMENTAIRES

(30) Priorität: 10.02.2021 DE 102021103088
(43) Veröffentlichungstag der Anmeldung: 17.08.2022
(73) Patentinhaber: Hilberer, Franz, 78234 Engen (DE)
(72) Erfinder: Hilberer, Franz, 78234 Engen (DE)
(74) Vertreter: Patentanwälte und Rechtsanwalt Weiß, Arat & Partner mbB

(56) Entgegenhaltungen:
- WO-A9-2014/036080
- DE-B4-102011 000 545
- DE-U1- 20 102 043
- US-B1- 6 477 853

## Beschreibung

### Technisches Gebiet

Die Erfindung betrifft eine verbesserte Vorrichtung zur Kühlung und Verarbeitung von Lebensmitteln nach dem Oberbegriff des Anspruchs 1, sowie eine Verwendung hierfür nach Anspruch 10.

### Stand der Technik

Derartige Vorrichtungen sind bereits in vielfältiger Form und Ausgestaltung bekannt und gebräuchlich.

Vorliegende Erfindung baut auf der DE 10 2011 000 545 B4 auf und verbesserte diese. Dort wird eine Vorrichtung offenbart, die ein gekühltes Behältnis für Konfiskat aufweist, wobei ein Abwurf für Konfiskat eine Verbindung zwischen einer Arbeitsplatte und einem gekühlten Behältnis darstellt.

In der DE 10 2011 000 545 B4 wird eine Vorrichtung zur Kühlung von Lebensmitteln mit einer Arbeitsplatte, mit einem Ventilator, mit einem Verdampfer, wobei der Ventilator, der Verdampfer und ein UV-C-Luftentkeimungsgerät unterhalb der Arbeitsplatte innerhalb einer Kammer angebracht sind, und einem Luftauslass, der einen gestuften Auswurf umfasst und einem Lufteinsog, der einen Lufteinsogschlitz umfasst, gekennzeichnet durch ein gekühltes Behältnis für Konfiskat und durch einen Abwurf für Konfiskat, wobei der Abwurf eine Verbindung zwischen der Arbeitsplatte und dem Behältnis darstellt, und Rollen mit Feststellmechanismus.

In diesem Zusammenhang wird auch auf die DE 103 48 246 B3 verwiesen. Dort wird eine Vorrichtung zum Kühlen von Lebensmitteln offenbart, welche eine einfache Reinigung des kompletten Wannenbodens und des Verdampfers ermöglicht und welche gleichzeitig eine einfache Zugänglichkeit zu den im Bereich des Drehgelenkes angeordneten Ventilatoren, Filter, Entkeimungseinrichtungen etc. zur Wartung, Kontrolle und Reinigung ermöglicht.

In Bezug auf eine UV-Lichtquelle zur Sterilisation wird ferner noch auf die DE 201 02 043 U1 verwiesen, in der eine Auslageeinrichtung zum Kühlen von Waren mit einem Kühlelement, welches der Kühlung der Auslagefläche dient, und mit einem Gehäuse, wobei mindestens eine Lichtquelle im Gehäuse angeordnet ist.

Weiterhin ist noch auf die US 6 477 853 B1 hinzuweisen, welche einen Kühlschrank offenbart, der nach dem Schließen der Kühlschranktür Organismen auf den eingelagerten Lebensmitteln mittels UV-Licht abtötet, wobei mehrere Sicherheitsmechanismen vorgesehen sind, die verhindern, dass Personen mit der UV-Strahlung in Kontakt kommen, beispielsweise ein Lichtsensor, der verhindert, dass sich das UV-Licht einschaltet, wenn es im Kühlschrank nicht völlig dunkel ist.

Und schließlich ist noch die WO 2014 036 080 A9 zu nennen. Dort wird allgemein auf ultraviolette Strahlung und insbesondere auf eine Lösung zum Sterilisieren, Desinfizieren und/oder dergleichen eines Lagerbereichs oder eines Lagergeräts unter Verwendung von ultravioletter Strahlung eingegangen.

### Aufgabe der Erfindung

Die Aufgabe der vorliegenden Erfindung ist es, die Nachteile aus dem Stand der Technik zu überwinden. Insbesondere soll eine Vorrichtung bereitgestellt werden, die zu dem genannten Stand der Technik eine Verbesserung in der Handhabung insbesondere im Bereich der Bedienungssicherheit und einer einfacheren Reinigungs- und Handhabungsweise erlaubt. Zudem soll die Kühlkette auch während der Verarbeitung der Lebensmittel nicht unterbrochen werde, wobei die Vorschriften der HACCP erfüllt werden sollen.

### Lösung der Aufgabe

Zur Lösung der Aufgabe führt der kennzeichnende Teil des Anspruchs 1. Vorteilhafte Ausgestaltungen und Weiterbildungen der Erfindungen sind in den abhängigen Ansprüchen angegeben.

Eine erfindungsgemässe Vorrichtung zur Kühlung von Lebensmitteln weist einen Ventilator auf. Dieser Ventilator ist in der Weise gestaltet, dass er auf der einen Seite die Luft ansaugt und auf der anderen Seite die Luft wegbläst, wodurch ein Lüftungskreislauf entsteht. Dies führt zu dem vorteilhaften Umstand, dass eine ständig gekühlte Umluft über der Arbeitsplatte erreicht werden kann. Die eine Seite ist hierbei die Seite, auf der die Luft wieder unter die Arbeitsplatte geführt wird. Die andere Seite ist die Seite, auf der die Luft wieder von unterhalb der Arbeitsplatte nach oben geführt wird.

Die erfindungsgemäße Vorrichtung weist einen Verdampfer auf. Dieser Verdampfer dient der Verdampfungskühlung. Der Verdampfer kühlt die vom Ventilator umgewälzte Luft auf eine vom Nutzer bevorzugte und bestimmte Temperatur. In diesem Zusammenhang ist auch von Vorteil, dass der Verdampfer selbst in einem bestimmten Bereich abkühlt.

Der Verdampfer ist mittig direkt unterhalb einer Arbeitsplatte und innerhalb der Kammer angeordnet. Dies verbessert den vorgesehenen zirkulierenden Luftstrom und kühlt zudem auf vorteilhafte Weise die Arbeitsplatte von unten durch die direkte Nähe zu ihr. Die Kammer dient mit ihrem Wannenboden zum Auffangen und Abführen von bei der Verarbeitung auf der Arbeitsplatte entstehenden und abfließenden Flüssigkeiten, wie beispielsweise Fleischsaft, die wenn gewünscht, über einen zu verschließenden bzw. zu öffnenden Abfluss verfügt, der an der tiefsten Stelle des Wannenbodens angeordnet ist. Weiterhin ist die Kammer Teil des Luftkreislaufsystems.

Die Arbeitsplatte ist vorteilhafterweise aus einem lebensmittelverträglichen Material hergestellt.

Dabei kann es sich um Kunststoff, Metall, Holz oder Keramik handeln. Sie bietet dem Nutzer eine vorteilhafte Grundlage für die anfallenden Schneidetätigkeiten. Die Arbeitsplatte ist in einem bevorzugten Ausführungsbeispiel abnehmbar oder abklappbar mit der Vorrichtung verbunden. Dies ist in der Weise vorteilhaft, als dass bei einer Abnutzung der Arbeitsplatte ein Austausch vorgenommen werden kann. Ausserdem vereinfacht eine abnehmbare Arbeitsplatte die spätere Reinigung. Eine abklappbare Arbeitsplatte wiederum hätte den Vorteil, dass sie beispielsweise nach der Reinigung mit Wasser hochgestellt werden könnte, damit das genutzte Wasser besser in die Kammer abfliesst. Die Verstellung der Arbeitsplatte in der Neigung ist optional stufenlos möglich. Dies kann beispielsweise durch eine Hydraulik erfolgen. Die Arbeitsplatte kann auch aus zwei separaten Bereichen bestehen, dies hat insbesondere bei der Reinigung Vorteile.

Ebenso wie die Arbeitsplatte ist der direkt unter dieser Arbeitsplatte angeordnete Verdampfer in bevorzugten Ausführungsbeispielen hochklappbar mit der Vorrichtung verbunden. In einer bevorzugten Vorrichtung ist der Verdampfer dazu mit flexiblen Anschlüssen ausgestattet. Beispielsweise mit flexiblen Schläuchen. Der Verdampfer kann über Gelenke, Scharniere und/ oder einem Rahmen mit der Vorrichtung verbunden sein.

Dabei können zum Beispiel Druckdämpfer bzw. pneumatische Federn oder dergleichen aber auch einfache Federsysteme unterstützend angeordnet sein. Dies hat den Vorteil, dass eine Reinigung des Verdampfers und auch des Bereichs an einer Unterseite des Verdampfers einfach möglich ist. Ebenso ist es auf diese Weise vereinfacht, den Verdampfer zu warten, ihn auszutauschen oder zu reparieren.

Zur vereinfachten Handhabung ist der Verdampfer mit Handgriffen ausgestattet. Diese Handgriffe erlaube es den Verdampfer leicht und beschädigungsfrei anzuheben bzw. hochzuklappen.

Mittels des Handgriffs ist das Hochklappen bzw. Anheben des Verdampfers besonders einfach, wobei auf diese Weise die Kammer mit dem Wannenboden und dem Abfluss leicht und problemlos erreicht werden kann, um die notwendigen Reinigungsarbeiten nach einer Verwendung in der vorgeschriebenen Sorgfalt durchführen zu können.

Weiterhin ist auch der Verdampfer an sich leichter von allen Seiten zu erreichen, so dass Verunreinigung, die sich beispielsweise an einer Stelle die dem Wannenboden der Kammer zugewandt sind, leicht erreicht und entfernt werden können.

Eine erfindungsgemässe Vorrichtung weist ausserdem ein UV-C-Luftentkeimungsgerät auf. Dieses Luftentkeimungsgerät entkeimt die vom Ventilator umgewälzte und vom Verdampfer gekühlte Luft in der Kammer in der Weise, als dass eine UV-C-Lichtquelle von der aus dem Ventilator strömenden Luft in einem bestimmten Bereich der Kammer vor Auftreffen auf die Arbeitsplatte entkeimt wird. Hierbei erfolgt eine Reinigung von unerwünschten Keimen, Viren, Hefen und Schimmelsporen. Durch die Anbringung des UV-C-Luftentkeimungsgeräts unterhalb der Arbeitsplatte werden Personen und Lebensmittel von der direkten Bestrahlung geschützt. Zudem sind weitere Schutzsysteme vorhanden, wie UV-Sensoren oder Kontaktsensoren.

Eine erfindungsgemässe Vorrichtung weist zusätzliche Schutzvorrichtungen auf. Diese Schutzvorrichtungen verhindern, dass ein Benutzer der erfindungsgemässen Vorrichtung, beispielsweise beim Anheben der Arbeitsplatte, mit UV-C Strahlen der Lichtquelle aus der Kammer, durch sofortige Abschaltung, in Kontakt gerät. Diese Schutzvorrichtungen erfolgen auf unterschiedliche Weisen.

Eine Schutzvorrichtung ist ein UV-Sensor der die Wellenlänge der vorliegenden Strahlung in der Kammer erfasst. Sobald die erfassten Wellenlängen auch Bereiche umfassen, die ausserhalb der Wellenlängen von UV-C-Strahlung liegen, wird die UV-C-Lichtquelle sofort abgeschaltet. Das kurzwellige UVC-Licht umfasst den Bereich von 100 bis 280 nm. Erfasst der UV-Sensor der Schutzvorrichtung Licht aus einem anderen Wellenlängenbereich, wird die UV-C-Lichtquelle abgeschaltet. Dies würde beispielsweise geschehen, wenn ein Benutzer die Arbeitsplatte versehentlich Anhebt oder abklappt, bevor er die UV-C-Lichtquelle ausgeschaltet hat, und so Licht eines Wellenlängenbereichs ausserhalb von 100 bis 280 nm in die Kammer eindringt.

Ferner verfügt die Schutzvorrichtung über einen oder mehrere Kontaktsensoren. Diese Kontaktsensoren erfassen die Position der Arbeitsfläche oder der Arbeitsflächen, falls dies geteilt sind. In diesem bevorzugten Falls sind zumindest zwei Kontaktsensoren, mindestens ein Kontaktsensor für jeden Teilbereich der Arbeitsflächen umfasst. Wird durch einen Benutzer die Arbeitsfläche oder ein Teilbereich der Arbeitsfläche angehoben, oder verlässt die Arbeitsfläche oder ein Teil dieser aus anderen Gründen die vorgesehene Positionierung während in der Kammer die UV-C-Leuchte aktiv ist, wird diese durch die Auslösung eines oder mehrerer Kontaktsensors /en sofort abgeschattet. Die Kontaktsensoren sind daher zusätzliche Sicherheitseinrichtungen die neben dem UV-Sensor das UV-C Luftentkeimungsgerät sofort ausschalten falls die Gefahr besteht, dass ein Benutzer mit der Strahlung in Kontakt kommen könnte.

Zudem ist ein zusätzlicher Sicherheitsabschalter an der erfindungsgemässen Vorrichtung angeordnet. Dieser zusätzliche Sicherheitsschalter schaltet automatisch die gesamte erfindungsgemässe Vorrichtung ab sobald die Arbeitsplatte oder Teile der Arbeitsplatte angehoben werden, oder ihre vorgesehene Position verlassen. Der Sicherheitsabschalter wirkt daher auf die gesamte erfindungsgemässe Vorrichtung und verhindert, dass der Benutzer vor potentiellen Verletzungsrisiken die von der erfindungsgemässen Vorrichtung theoretisch und insbesondere bei ungemäßer Verwendung ausgehen könnten, geschützt wird.

Diese Sicherheitseinrichtungen erlauben es, dass das UV-C-Luftentkeimungsgerät nicht, wie häuft üblich in einem abgeschotteten Bereich, beispielsweise in einem Lüftungsrohr angeordnet sein muss, sondern nahezu den gesamten inneren Bereich der Kammer bestrahlen kann. Dadurch wird nicht nur ein Teilbereich sterilisiert, sondern weitgehend das gesamte Innere der Kammer mit allen dort angeordneten Elementen. Dies trägt enorm zur Hygiene der erfindungsgemässen Vorrichtung bei und darf in seiner Wirkung nicht unterschätzt werden.

Eine bevorzugte Vorrichtung weist dafür mehrere UV-C-Luftentkeimungsgerät innerhalb der Kammer und im Bereich um den Verdampfer auf.

Die erfindungsgemässe Vorrichtung ist ausserdem in der Weise gestaltet, dass der Ventilator, der Verdampfer und das UV-C-Luftentkeimungsgerät unterhalb der Arbeitsplatte angebracht sind. Dies ist von Vorteil, da der Verdampfer in der Weise angeordnet ist, dass die vom Verdampfer abgegebene Kälte direkt auf die Unterseite der Arbeitsplatte einwirkt. Ausserdem ist es einfacher einen Umlufteffekt zu erreichen, wenn der Ventilator unterhalb der Arbeitsplatte angeordnet ist. Dies resultiert aus dem Umstand, dass die auf der einen Seite durch einen Luftauslass hinaus geblasene entkeimte Luft schwerer ist als warme Luft und dadurch auf der Arbeitsplatte aufliegt. Es ist wiederum auch einfacher, dass kalte Luft durch das Erzeugen von Unterdruck an einem Lufteinsog wiederum dem Ventilator und dem Verdampfer zugeführt werden kann.

Bei einer bevorzugten Ausführungsform sind der Luftauslass und der Lufteinsog jeweils an einer gegenüberliegenden Seite der Arbeitsplatte angeordnet, so dass ein effektiver Umlufteffekt entsteht.

Ein bevorzugtes Ausführungsbeispiel einer Vorrichtung weist ausserdem eine Rechnersteuerung zur Aufrechterhaltung einer vorbestimmten Temperatur der Arbeitsplatte und der Luft oberhalb der Arbeitsplatte auf. Dies geschieht in der Weise, dass ständig die einströmende Luft am Lufteinsog und am Luftauslass gemessen wird, um eine immer gleichbleibende Temperatur zu gewährleisten. Der Verdampfer wird entsprechend durch die Rechnersteuerung angefahren. Die Rechnersteuerung wirkt hier ähnlich einem Thermostat. Sie hat aber ausserdem für verschiedene Lebensmittel hinterlegte Temperaturen. Der Nutzer kann optional durch Eingabe des zu bearbeitenden Lebensmittels die optimale Temperatur unter Anpassung der ebenfalls gemessenen allgemeinen Temperatur im Raum nutzen. Dies ist in der Weise vorteilhaft, als das der Nutzer nicht mehr eine entsprechende manuelle Einstellung vornehmen muss. Eine entsprechende Regulierung findet durch die Rechnersteuerung statt.

In einem anderen bevorzugten Ausführungsbeispiel wird die Rechnersteuerung über einen Eingabebereich bedient. Hierbei können beispielsweise Symbole für Fisch oder verschiedene Arten von Fisch, sowie verschiedene Arten von Fleisch hinterlegt, welche der Nutzer in einfacher Weise durch Drücken und Bestimmen des zu bearbeitenden Fleisches wählen kann. Ausserdem kann aber auch eine simple Temperatureinstellung zum Einsatz kommen, welche lediglich mit je einer +/- Taste und einer Anzeige versehen ist. Hier kann der Nutzer eine gewünschte Temperatur durch Drücken der jeweiligen +/- Taste wählen. Die restliche Anpassung der optimalen Temperatur erfolgt dann durch die Rechnersteuerung, welche wiederum den Verdampfer und den Ventilator antreibt. Natürlich können der Verdampfer und insbesondere der Ventilator auch manuelle bedient werden.

Die am Lufteinsog hineingesogene Luft wird durch einen Temperaturfühler aufgezeichnet, wobei der Temperaturfühler neben der Aufnahme der Temperatur der Luft auch die Menge der hineinströmenden Luft messen kann. In gleicher Weise ist ein Temperaturfühler am Luftauslass bei der auszublasenden Luft angeordnet.

Ein erfindungsgemässes Ausführungsbeispiel weist ausserdem ein gekühltes Behältnis für Konfiskat auf. Dieses Behältnis ist ebenfalls unterhalb der Arbeitsplatte angebracht, so dass während der Bearbeitung anfallendes Konfiskat über einen Abwurf direkt in das Behältnis gelangt. Hierbei ist aufgrund der Anbringung des Verdampfers und der dort ausstrahlenden Kälte eine Kühlung des Behältnisses, des Abwurfs und damit des Konfiskats erreicht, was wiederum vorteilhaft auf die Hygiene der gesamten Vorrichtung auswirkt.

Ein bevorzugtes Ausführungsbeispiel umfasst ausserdem eine herausnehmbare Kondensschale die ausserhalb der Kammer angeordnet ist. Diese herausnehmbare Kondensschale dient dem Auffangen von Kondenswasser, welches sich beispielsweise auf der Unterseite der Arbeitsplatte, bei der Abkühlung der erwärmten Luft oder auch beim gezielten Abtauen des Verdampfers entsteht.

Ein Ausführungsbeispiel ist bevorzugt aus ChromNickelstahl hergestellt. Dies ist in der Weise vorteilhaft, als dass eine Reinigung vereinfacht wird. Chrom- Nickelstahl ist als Oberfläche widerstandsfähig und erfüllt ausserdem die Ansprüche an eine ästhetische Gestaltung der Vorrichtung.

Ein anderes bevorzugtes Ausführungsbeispiel der Vorrichtung arbeitet bevorzugt zwischen +3° und -8° Celsius, noch bevorzugter zwischen +5° und - 12° Celsius und am bevorzugtesten zwischen +8° und -15° Celsius. In diesen Temperaturen können Lebensmittel je nach Eigenschaft und Umgebungstemperatur am besten bearbeitet, präsentiert und HACCP konform behandelt werden. Insbesondere soll aber eine Kühlleistung zwischen +2°C und +6°C erreicht werden.

Die bevorzugte Rechnersteuerung verfügt ausserdem über eine automatische Abtauung. Dies bedeutet im Einzelnen beispielsweise, dass eine regelmässige Abtauung die Bildung von Eis an einzelnen Teilen verhindert, was wiederum zu einer hygienischen Nutzung und einer längeren Lebensdauer führt.

Die Vorrichtung verfügt ausserdem optional über eine Abdeckklappe, welche über die Arbeitsplatte gelegt werden kann. Diese Abdeckklappe kann ebenfalls aus Chrom- Nickelstahl oder aus Kunststoff hergestellt sein. Gerade zu Präsentationszwecken ist es vorteilhaft, durchsichtigen Kunststoff oder Glas zum Einsatz zu bringen.

Ein bevorzugtes Ausführungsbeispiel einer Vorrichtung zur Kühlung von Lebensmitteln kann auch in der Weise ausgestaltet sein, dass die Arbeitsfläche in verschiedene Bereiche eingeteilt ist. Beispielsweise kann die Hälfte der Arbeitsfläche aus Kunststoff und die andere Hälfte aus Metall oder kältespeicherndem Marmor ausgebildet sein. Es ist vorteilhaft, Teilarbeitsflächen aus verschiedenen Materialien zur Verfügung zu stellen, um eine optimale Anpassung an die Bedürfnisse des jeweiligen Nutzers zu gewährleisten.

Ein anderes bevorzugtes Ausführungsbeispiel der Vorrichtung umfasst neben individuelle in ihrer Höhe anpassbaren Standfüßen auch Füße mit Rollen. Diese Füße mit Rollen verfügen wiederum über einen Feststellmechanismus. Sie haben den Vorteil, dass die Vorrichtung von einem Nutzer auf einfache Art und Weise zu jedem beliebigen Ort geschoben werden kann.

Weiterhin umfasst ein Ausführungsbeispiel optional ein Hustenschutzglas, welches abnehmbar oder aufklappbar auf der Arbeitsplatte aufliegt. Das Hustenschutzglas kann beispielsweise durch Hydraulikelemente bis zu einem gewissen Winkel aufgestellt werden, so dass der Nutzer auf der Arbeitsplatte das entsprechende Lebensmittel be- oder verarbeiten kann, während auf der anderen Seite des Hustenschutzglases Zuschauer anwesend sein können. Hierbei ist vorteilhaft, dass trotz der Nähe ein optimaler Schutz vor Kontamination mit Bakterien od. dgl. verhindert wird.

Die bevorzugte Vorrichtung weist ausserdem einen integrierten Anschluss für eine Reinigungsbrause auf. Diese Reinigungsbrause dient dem Nutzer zur Reinigung der Arbeitsplatte am Ende eines Arbeitstages oder eines Arbeitsgangs. Sie wird durch eine externe Wasserquelle gespeist.

Die bevorzugte Vorrichtung weist folgende nicht abschliessende Beispielsmasse auf. So ist bei einer Arbeitsfläche mit einer Breite zwischen 650 mm und 800 mm und einer Tiefe zwischen 600 mm und 750 mm, eine Gesamtbreite der Vorrichtung zwischen 750 mm und 910 mm sowie eine Gesamttiefe zwischen 630 mm und 790 mm vorhanden. Ein besonders bevorzugtes Ausführungsbeispiel weist bei der Arbeitsplatte eine Breite von 725 mm und eine Tiefe von 675 mm auf. Die Vorrichtung weist dabei eine Gesamtbreite von 830 mm und eine Gesamttiefe von 710 mm auf.

Ein anderes bevorzugtes Ausführungsbeispiel ist in der Weise gestaltet, dass die Arbeitsplatte eine Breite zwischen 1000 mm und 1200 mm und eine dazugehörige Tiefe von 600 mm bis 750 mm aufweist. Dabei ist die Gesamtbreite der Vorrichtung zwischen 1100 mm und 1300 mm anzusetzen sowie die Gesamttiefe der Vorrichtung zwischen 630 mm und 790 mm. Bei einem besonders bevorzugten Ausführungsbeispiel weist die Arbeitsplatte eine Breite von 1090 mm und eine Tiefe von 675 mm auf. Die Gesamtvorrichtung weist hierbei eine Gesamtbreite von 1200 mm und eine Gesamttiefe von 710 mm auf. Bei diesen Massen handelt es sich um für einen Nutzer einfach zu transportierende und zu bearbeitende Masse. Die Arbeitshöhe der Arbeitsplatte ist in der Regel zwischen 850 mm und 900 mm, bevorzugt 870 mm, noch bevorzugter 800 mm bis 1000 mm gestaltet.

Ein erfindungsgemässes Ausführungsbeispiel weist einen gestuften Auswurf für die vom Verdampfer gekühlte und vom Ventilator ausgestossene Luft auf. Dieser gestufte Auswurf ist in der Weise gestaltet, dass die gesamte Arbeitsplatte mit kalter Luft umgeben ist. Der gestufte Auswurf wird je nach Grösse der Arbeitsplatte voreingestellt, um eine entsprechende optimale Kühlung zu erreichen. Ein anderes Ausführungsbeispiel überlässt dem Nutzer hierbei eine geringe Einstellmöglichkeit. Vorteilhaft hierbei ist, dass aufgrund vorher bestimmter Versuche in Bezug auf die Grösse der Arbeitsplatte eine optimale Abstimmung des gestuften Auswurfs eingestellt wird, um die gesamte Arbeitsplatte mit kalter Luft zu beaufschlagen.

Ein erfindungsgemässer Lufteinsog ist in Form von Lufteinsogschlitzen vorgesehen. Diese Lufteinsogschlitze sollen dazu dienen, gössere Reste von Konfiskat, welche versehentlich auf den Lufteinsog geraten, von einem Eindringen in den Bereich unterhalb der Arbeitsplatte fernzuhalten. Ausserdem sollen die Lufteinsogschlitze in der Weise gestaltet sein, dass ein unterhalb der Lufteinsogschlitze vorhandener Unterdruck die kalte Luft von oberhalb der Arbeitsplatte anzieht und dem Ventilator und dem Verdampfer zuführt.

Weiterhin wird auf einen Luftfilter hingewiesen, welcher anschliessend an den Ventilator angebracht ist. Es handelt sich hierbei um einen so genannten V2A-Filter.

Zuletzt soll darauf hingewiesen werden, dass die Vorrichtung mit einem festen Abfluss verbindbar ist.

Als Kältemittel ist in der bevorzugten Vorrichtung das Kältemittel R290 zu verwenden, dies hat insbesondere in Hinsicht auf den Umweltschutz erhebliche Vorteile gegenüber herkömmlichen Kältemitteln.

Auch lässt sich die Vorrichtung an ein externes Kühlgerät, Kühlregister oder eine andere Kältequelle anschließen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine Seitenansicht einer erfindungsgemässen Vorrichtung;
Figur 2 eine Ansicht schräg von oben auf eine erfindungsgemässe Vorrichtung;
Figur 3 eine geschnittene Seitenansicht entlang einer Schnittlinie S1 einer erfindungsgemässen Vorrichtung;
Figur 4 eine Draufsicht auf eine erfindungsgemässe Vorrichtung ohne Arbeitsplatte;
Figur 5 eine geschnittene Draufsicht entlang einer Schnittlinie S2 auf eine erfindungsgemässe Vorrichtung;
Figur 6 eine weitere geschnittene Draufsicht entlang einer Schnittlinie S3 auf eine erfindungsgemässe Vorrichtung;
Figur 7 eine geschnittene Seitenansicht entlang einer Schnittlinie S4 einer erfindungsgemässen Vorrichtung.

### Ausführungsbeispiel

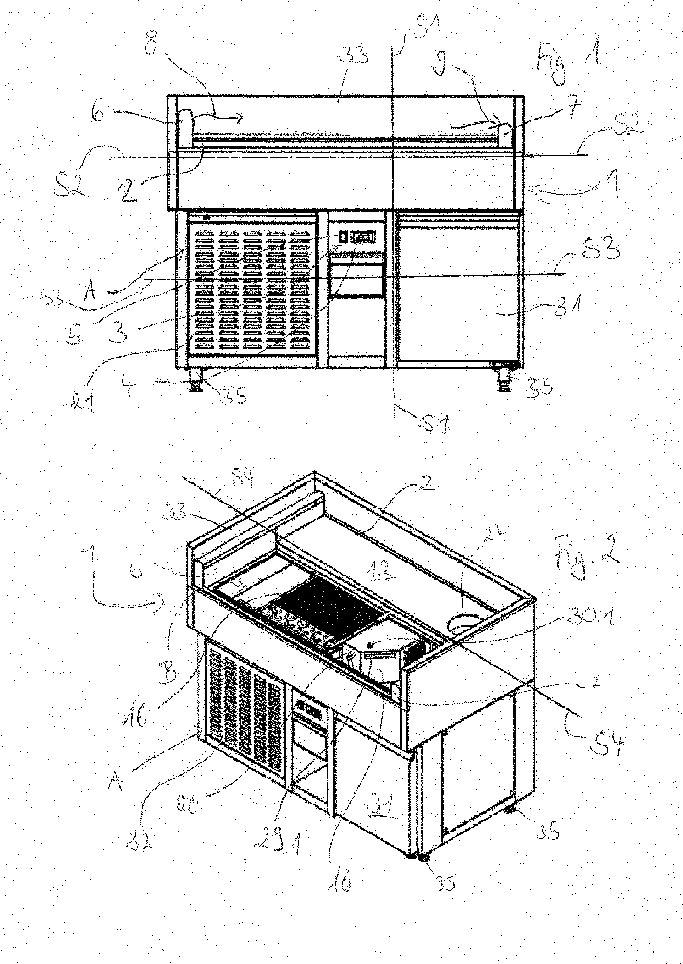

In Figur 1 ist eine Vorrichtung 1 zur Kühlung von Lebensmitteln gezeigt. Diese Vorrichtung 1 verfügt über eine Arbeitsplatte 2. An einer Bedienseite A der Vorrichtung 1 ist unterhalb der Arbeitsplatte 2 ist ein Eingabebereich 3 zu erkennen, welcher über ein Tastenfeld 4 sowie ein Temperaturanzeigefeld 5 verfügt. Hierbei sind auf den Tasten des Tastenfelds 4 entweder verschiedene Temperaturen oder Lebensmittel aufgezeigt, welcher der Nutzer durch einen Wählmodus auswählen kann. Der Temperaturanzeigebereich 5 dient dem Nutzer zur Überprüfung der tatsächlichen Temperatur der Luft oberhalb der Arbeitsplatte 2. Diese kann digital oder analog gestaltet sein. Ausserdem ist in Figur 1 ein Luftauslass 6, sowie ein Lufteinsog 7 gezeigt. Oberhalb des Luftauslasses 6 ist ein Pfeil 8 gezeigt, welcher schematisch andeuten soll, wie die kalte Luft aus dem Bereich unterhalb der Arbeitsplatte in den Bereich oberhalb der Arbeitsplatte gebracht wird. Beim Lufteinsog 7 ist ein Pfeil 9 gezeigt, welcher wiederum darstellen soll, wie die abgeführte Luft durch den Lufteinsog 7 in den Bereich unterhalb der Arbeitsplatte 2 eingesogen wird. Die Arbeitsplatte 2 sowie der Lufteinsog 7 und der Luftauslass 6 sind an drei Seiten von einem Rahmen 33 eingefasst, der nur an der Bedienseite A offen ist. Weiterhin ist eine Tür 31 und ein Belüftungsbereich 32 an der Bedienseite A der Vorrichtung 1 ersichtlich. Auch ersichtlich sind zwei von vier Füßen 35. Diese Füße 35 sind individuell in ihrer Länge regulierbar, so dass eine bewegungsfreie Standfestigkeit der Vorrichtung 1 auch bei unebenen Untergrund gewährleistet werden kann.

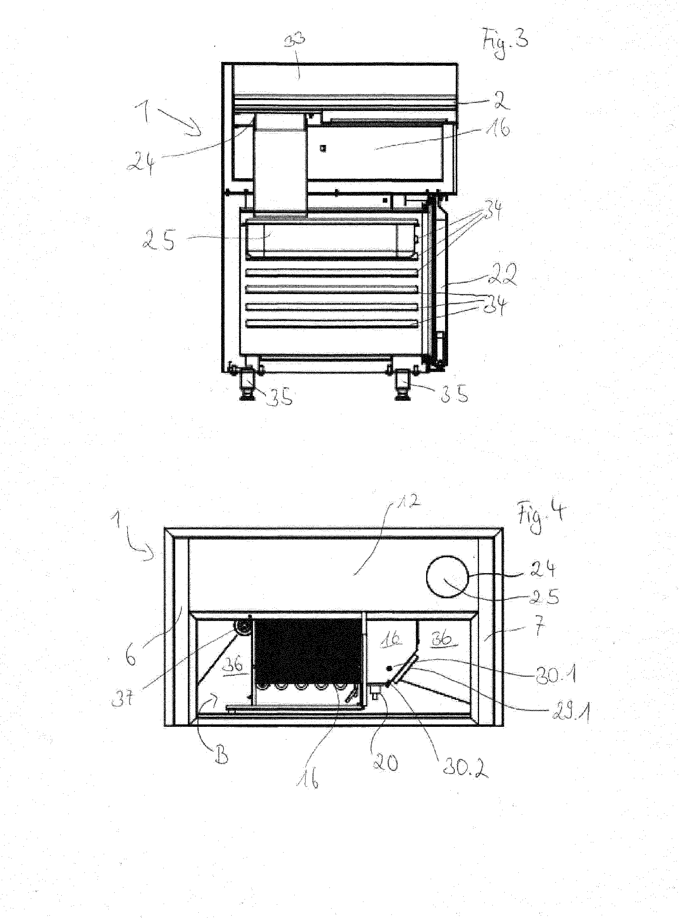

In Figur 1 sind zudem drei Schnittlinien S1, S2 und S3 abgebildet. Sie verdeutlichen die geschnittenen Ansichten der Figuren 3, 5 und 6.

In Figur 2 ist eine Ansicht schräg von oben auf eine erfindungsgemässe Vorrichtung 1 ersichtlich. Die Arbeitsplatte 2 ist in eine Teilfläche 12 und eine weitere nicht dargestellte Teilfläche 11 unterteilt. Durch die nicht dargestellte Teilfläche 11 der Arbeitsplatte 2 ist der Blick in eine Kammer bzw. in ein Inneres B der Vorrichtung 1 freigegeben. Aus dieser Perspektive ist im Inneren B ein Verdampfer 16 ersichtlich, welcher direkt unterhalb der Arbeitsplatte 2 angeordnet ist. Weiterhin ersichtlich ist ein erster von zwei Handgriffen 29.1 die an dem Verdampfer 16 zur besseren Handhabung angeordnet sind.

Ferner ist in dem Bereich des erstens Handgriffs 29.1 auf der Oberseite des Verdampfers, also der Seite, die in Richtung des Arbeitsbrettes 2 zeigt, ein UV-Sensor 30.1 angeordnet. Ebenfalls in Bereich des ersten Handgriffs 29.1 allerdings an der Seite des Verdampfers 16 die mit der Bedienseite A der Vorrichtung 1 übereinstimmt, ist ein UV-C-Luftentkeimungsgerät 20 angeordnet.

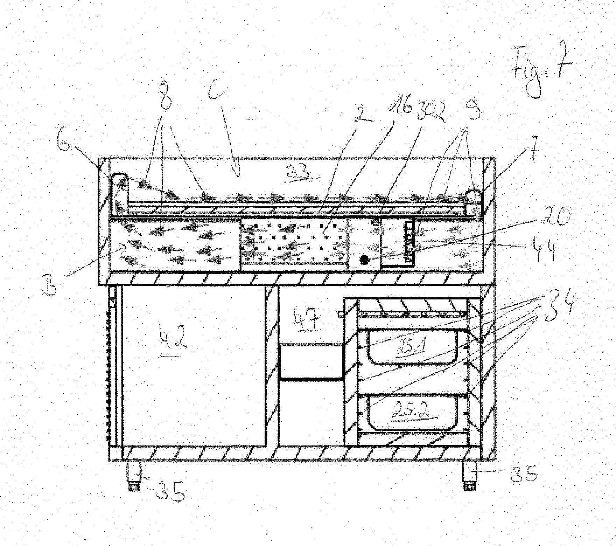

Schließlich ist in Figur 2 noch eine Schnittlinie S4 dargestellt, die die Position der geschnittenen Ansicht aus Figur 7 beschreibt.

In Figur 3 ist eine geschnittene Seitenansicht der erfindungsgemässen Vorrichtung 1 entlang einer Schnittlinie S1 aus Figur 1 ersichtlich. In dieser geschnittenen Ansicht ist der röhrenförmige Abwurf 24 ersichtlich, welcher eine Verbindung zwischen der Teilfläche 12 der Arbeitsplatte 2 und einem Behältnis 25 herstellt. Das Behältnis 25 ist über die zu öffnende Tür 31 in die Vorrichtung 1 einschiebbaren. Dabei ist eine Einschiebe-Höhe des Behältnis 25 durch Aufnahmen 34 wählbar. Natürlich können auch mehrere Behältnisse dort über- und untereinander eingeschoben werden. Natürlich kann auch die Größe des Behältnisses 25 variieren und beispielsweise den gesamten Bereich unterhalb des Abwurf 24 einnehmen.

In Figur 4 ist eine Draufsicht auf eine erfindungsgemässe Vorrichtung 1 mit einer Teilfläche 12 der Arbeitsplatte 2 mit dem Abwurf 24 und ebenfalls die Teilfläche 11 gezeigt, wodurch der Blick teilweise in die Kammer bzw. das Innere B der Vorrichtung 1 freigegeben ist. Die Arbeitsplatte 2 ist auch hier unterteilt in die nicht dargestellte Teilfläche 11 und in die andere Teilfläche 12. Die entsprechenden Teilflächen 11, 12 können aus unterschiedlichen Materialien bestehen. Ausserdem sind in dieser Ansicht ebenfalls der Luftauslass 6 und der Lufteinsog 7 ersichtlich.

Weiterhin zeigt Figur 4 eine Wannenboden 36 mit einem Abfluss 37. Der Abfluss 37 ist an der tiefsten Stelle des Wannenbodens 37 angeordnet, so dass gewährleistet ist, dass Flüssigkeiten zuverlässig abfließen können.

Auch zu erkennen ist das UV-C-Luftentkeimungsgerät 20 sowie der UV-Sensor 30.1 die an dem Verdampfer angeordnet sind. Ein weiterer UV-Sensor 30.2 ist nicht ersichtlich, da er von dem UV-C-Luftentkeimungsgerät 20 aus dieser Perspektive verdeckt wird.

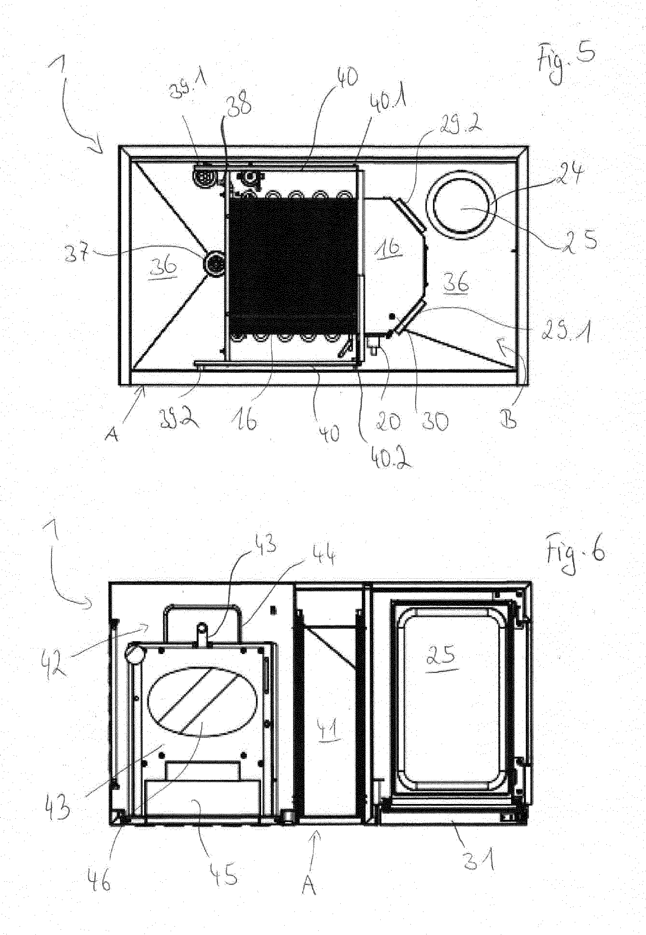

In Figur 5 ist eine geschnittene Draufsicht entlang der Schnittlinie S2 auf Figur 1 dargestellt. Hier ist die Teilfläche 12 der Arbeitsplatte 2 nicht dargestellt ist, so dass ein vollständiger Blick in die Kammer bzw. das innere B der Vorrichtung 1 möglich ist.

Der Blick ist nun frei auf den gesamten Verdampfer 16, wobei auch ein zweiter Handgriff 29.2 ersichtlich ist.

Auch ersichtlich ist, dass der Verdampfer 16 an einem Rahmen 40 aufgehängt ist, welcher einerseits an sich gegenüberliegenden Seiten, gesehen von der Bedienseite A aus, an einem ersten Scharnier 39.1 und einem zweiten Scharnier 39.2 drehbeweglich mit der Vorrichtung 1 verbunden ist. Jeweils in Richtung der Griffe 29.1 und 29.1 liegt der Rahmen 40 einerseits anhebbar und oder hochklappbar, auf ebenfalls gegenüberliegenden Bolzen 41.1 und 41.2 der Vorrichtung 1 auf. Damit der Verdampfer über die Scharniere 39.1 und 39.2 aus der Kammer bzw. dem Inneren B der Vorrichtung 1, beispielsweise zu Reinigungs- oder Wartungszwecken herausgedreht bzw. heruasgeklappt werden kann, ist dieser über flexible Leitungen 38 mit der Vorrichtung 1 verbunden.

In Figur 6 ist eine weitere geschnittene Draufsicht auf eine erfindungsgemässe Vorrichtung 1 ersichtlich, wobei der Schnitt unterhalb des Wannenboden 36 angesetzt wurde. Ersichtlich ist ein Behältnis 25, ein Elektronikbereich 47 (Figur 7) und ein Bereich 42 mit einer Verflüssiger 45 und einem Kompressor 46 zum Betrieb des Verdampfers 16, sowie einem Ablaufschlauch für Tauwasser 43 und einer Kälteleitung 44.

In Figur 7 ist eine geschnittene Seitenansicht entlang der Schnittlinie S4 aus Figur 2 der erfindungsgemässen Vorrichtung 1 schematisch dargestellt. Ersichtlich ist der durch die Pfeile 8 und 9 dargestellte Luftkreislauf über und unter der Arbeitsplatte 2. Dabei wird die Luft, dargestellt durch die Pfeile 9 am Lufteinlass 7 in das Innere B bzw. die Kammer der Vorrichtung 1 eingesogen, am Gebläse 44 vorbei gesogen, im Bereich der UV-C-Luftentkeimungsgeräte 20 entkeimt, im Bereich des Verdampfers 16 abgekühlt und durch den Luftauslass 6 an einer Aussenseite C wieder über die Arbeitsfläche 2 zurückgeführt.

**Bezugszeichenliste**

| | | | |
|---|---|---|---|
| 1 | Vorrichtung | 34 | Aufnahmen |
| 2 | Arbeitsplatte | 35 | Füße |
| 3 | Eingabebereich | 36 | Wannenboden |
| 4 | Tastenfeld | 37 | Abfluss |
| 5 | Temperaturanzeigefeld | 38 | flexible Anschlüsse |
| 6 | Luftauslass | 39.1, 39.2 | Scharniere |
| 7 | Lufteinsog | 40 | Rahmen |
| 8 | Pfeil | 41.1, 40.2 | Bolzen |
| 9 | Pfeil | 42 | Bereich |
| 11 | Teilfläche | 43 | Ablaufschlauch Tauwasser |
| 12 | Teilfläche | 44 | Kälteleitung |
| S1 | Schnittlinie | 45 | Verflüssiger |
| S2 | Schnittlinie | 46 | Kompressor |
| S3 | Schnittlinie | 47 | Elektronikbereich |
| 16 | Verdampfer | | |
| | | | |
| S4 | | | |
| 20 | UV-C-Luftentkeimungsgerät | | |
| 24 | Abwurf | | |
| 25 | Behältnis | | |
| 29.1, 29.2 | Handgriffe | | |
| 30.1, 30.2 | UV-Sensor | | |
| 31 | Tür | | |
| 32 | Belüftungsbereich | | |
| 33 | Rahmen | | |

## Patentansprüche

1. Vorrichtung (1) zur Kühlung von Lebensmitteln mit einer Arbeitsplatte (2), mit einem Ventilator und mit einem Verdampfer (16), wobei der Ventilator, der Verdampfer (16) und ein UV-C-Luftentkeimungsgerät (20) mit einer UV-C-Lichtquelle unterhalb der Arbeitsplatte (2) innerhalb einer Kammer angebracht sind, und einem Luftauslass (6), der einen gestuften Auswurf aufweist, und einem Lufteinsog (7), der einen Lufteinsogschlitz aufweist, wobei ein gekühltes Behältnis (25) für Konfiskat angeordnet ist, welches durch einen Abwurf (24) mit der Arbeitsplatte (2) verbunden ist und wobei ein Kontaktsensor die Position der Arbeitsfläche erfasst und ein Sicherheitsabschalter angeordnet ist,
**gekennzeichnet durch**,
einen UV-Sensor (30.1, 30.2) in der Kammer, wobei der UV-Sensor (30.1, 30.2) die UV-C-Lichtquelle des UV-C-Luft-Entkeimungsgeräts (20) sofort abgeschaltet, sobald die durch den UV-Sensor erfassten Wellenlängen auch Bereiche umfassen, die ausserhalb der Wellenlängen von UV-C-Strahlung liegen.

2. Vorrichtung (1) nach Anspruch 1, **dadurch gekennzeichnet, dass** der Verdampfer (16) an einem Rahmen (40) aufgehängt ist.

3. Vorrichtung (1) nach den Ansprüchen 1 und 2, **dadurch gekennzeichnet, dass** der Rahmen (40) an einem ersten Scharnier (39.1) und einem zweiten Scharnier (39.2) mit der Vorrichtung (1) verbunden ist.

4. Vorrichtung (1) nach den vorherigen Ansprüchen, **dadurch gekennzeichnet, dass** der Rahmen (40) einerseits auf Bolzen (41.1, 41.2) der Vorrichtung (1) aufliegt.

5. Vorrichtung (1) nach den vorherigen Ansprüchen, **dadurch gekennzeichnet, dass** der Verdampfer (16) über flexible Leitungen (38) mit der Vorrichtung (1) verbunden ist.

6. Vorrichtung (1) nach den vorherigen Ansprüchen, **dadurch gekennzeichnet, dass** an dem Verdampfer (16) ein Handgriff (29.1, 29.2) angeordnet ist.

7. Vorrichtung (1) nach den vorherigen Ansprüchen, **dadurch gekennzeichnet, dass** längenregulierbare Füße (35) angeordnet sind.

8. Vorrichtung (1) nach den vorherigen Ansprüchen, **dadurch gekennzeichnet, dass** die am Lufteinsog (7) hineingesogene Luft durch einen Temperaturfühler gemessen wird, wobei der Temperaturfühler neben der Lufttemperatur auch die Menge der hineinströmenden Luft erfasst.

9. Vorrichtung (1) nach den vorherigen Ansprüchen, **dadurch gekennzeichnet, dass** die am Luftauslass (6) hinausströmenden Luft durch einen weiteren Temperaturfühler gemessen wird, wobei der weitere Temperaturfühler neben der Lufttemperatur auch die Menge der hinausströmenden Luft erfasst.

10. Verwendung einer Vorrichtung (1) nach einem der Ansprüche 1 bis 9 als umluftgekühlte Arbeits- / Präsentationsfläche für Fleisch-, Wurst-, Käse-, Fisch-, Obstverarbeitung oder Catering.

## Claims

1. Device (1) for cooling food with a worktop (2), with a fan and with an evaporator (16), wherein the fan, the evaporator (16) and a UV-C air sterilizer (20) with a UV-C light source are mounted below the worktop (2) within a chamber, and an air outlet (6) having a stepped ejection, and an air intake (7) having an air intake slot, wherein a cooled container (25) for confiscate is arranged, which is connected to the worktop (2) by a discharge (24) and wherein a contact sensor detects the position of the work surface and a safety switch-off is arranged,
**characterized by**
a UV sensor (30.1, 30.2) in the chamber, wherein the UV sensor (30.1, 30.2) immediately switches off the UV-C light source of the UV-C air disinfection device (20) as soon as the wavelengths detected by the UV sensor also include areas which lie outside the wavelengths of UV-C radiation.

2. Device (1) according to claim 1, **characterized in that** the evaporator (16) is suspended from a frame (40).

3. Device (1) according to claims 1 and 2, **characterized in that** the frame (40) is connected to the device (1) at a first hinge (39.1) and a second hinge (39.2).

4. Device (1) according to the preceding claims, **characterized in that** the frame (40) rests on one side on bolts (41.1, 41.2) of the device (1).

5. Device (1) according to the preceding claims, **characterized in that** the evaporator (16) is connected to the device (1) via flexible pipes (38).

6. Device (1) according to the preceding claims, **characterized in that** a handle (29.1, 29.2) is placed on the evaporator (16).

7. Device (1) according to the preceding claims, **characterized in that** length-adjustable feet (35) are placed.

8. Device (1) according to the preceding claims, **characterized in that** the air drawn in at the air inlet (7) is measured by a temperature sensor, wherein the temperature sensor also detects the amount of air flowing in in addition to the air temperature.

9. Device (1) according to the preceding claims, **characterized in that** the air flowing out at the air outlet (6) is measured by a further temperature sensor, wherein the further temperature sensor also detects the amount of air flowing out in addition to the air temperature.

10. Usage of a device (1) according to one of the claims 1 to 9 as a circulating air-cooled work/presentation surface for meat, sausage, cheese, fish, fruit processing or catering.

## Revendications

1. Dispositif (1) permettant de refroidir des aliments, comportant un plan de travail (2), un ventilateur et un évaporateur (16), dans lequel le ventilateur, l'évaporateur (16) et un appareil de stérilisation de l'air par UV-C (20) comportant une source de lumière UV-C sont montés sous le plan de travail (2) à l'intérieur d'une chambre, et une sortie d'air (6) qui présente une éjection étagée, et une aspiration d'air (7) qui présente une fente d'aspiration d'air, dans lequel est disposé un récipient (25) refroidi pour des produits déclassés, lequel est relié au plan de travail (2) par une éjection (24) et dans lequel un capteur de contact détecte la position du plan de travail et un interrupteur de sécurité est disposé,
**caractérisé par**
un capteur d'UV (30.1, 30.2) dans la chambre, dans lequel le capteur d'UV (30.1, 30.2) éteint immédiatement la source de lumière UV-C de l'appareil de stérilisation d'air par UV-C (20) dès que les longueurs d'onde détectées par le capteur d'UV comprennent également des gammes qui se trouvent en dehors des longueurs d'onde du rayonnement UV-C.

2. Dispositif (1) selon la revendication 1, **caractérisé en ce que** l'évaporateur (16) est suspendu à un cadre (40).

3. Dispositif (1) selon les revendications 1 et 2, **caractérisé en ce que** le cadre (40) est relié au dispositif (1) au niveau d'une première charnière (39.1) et d'une seconde charnière (39.2).

4. Dispositif (1) selon les revendications précédentes, **caractérisé en ce que** le cadre (40) repose d'une part sur des boulons (41.1, 41.2) du dispositif (1).

5. Dispositif (1) selon les revendications précédentes, **caractérisé en ce que** l'évaporateur (16) est relié au dispositif (1) par l'intermédiaire de conduites flexibles (38).

6. Dispositif (1) selon les revendications précédentes,
**caractérisé en ce qu'**une poignée (29.1 , 29.2) est disposée au niveau de l'évaporateur (16).

7. Dispositif (1) selon les revendications précédentes, **caractérisé en ce que** des pieds (35) réglables en longueur sont disposés.

8. Dispositif (1) selon les revendications précédentes, **caractérisé en ce que** l'air aspiré au niveau de l'aspiration d'air (7) est mesuré par une sonde de température, dans lequel la sonde de température détecte non seulement la température de l'air, mais aussi la quantité d'air s'écoulant vers l'intérieur.

9. Dispositif (1) selon les revendications précédentes, **caractérisé en ce que** l'air s'écoulant au niveau de la sortie d'air (6) est mesuré par une sonde de température supplémentaire, dans lequel la sonde de température supplémentaire détecte non seulement la température de l'air mais également la quantité d'air s'écoulant vers l'extérieur.

10. Utilisation d'un dispositif (1) selon l'une des revendications 1 à 9 en tant que surface de travail / de présentation réfrigérée par circulation d'air pour le traitement de la viande, de la charcuterie, du fromage, du poisson, des fruits ou pour le service traiteur.
